# EUROPEAN PATENT SPECIFICATION

(11) **EP 0 501 778 B1**
(45) Date of publication and mention of the grant of the patent: **29.05.1996**
(21) Application number: 92301619.0
(22) Date of filing: 26.02.1992
(51) Int. Cl.: G11B 23/087

(54) **Magnetic tape cassette**
Magnetbandkassette
Cassette à bande magnétique

(30) Priority: 28.02.1991 JP 58277/91
(43) Date of publication of application: 02.09.1992
(73) Proprietor: VICTOR COMPANY OF JAPAN, LIMITED, Yokohama-Shi Kanagawa-Ken 221 (JP)
(72) Inventor: Takeshi, Eino, Izumi-ku Yokohama-shi Kanagawa-ken (JP); Hiroyuki, Umeda, Kanagawa-ken (JP)
(74) Representative: Gladwin, Philip

(56) References cited:
- EP-A- 0 135 195
- EP-A- 0 169 546
- EP-A- 0 189 324
- EP-A- 0 406 943
- PATENT ABSTRACTS OF JAPAN vol. 10, no. 22 (P-424)28 January 1986 & JP-A-60 175 233
- PATENT ABSTRACTS OF JAPAN vol. 7, no. 164 (P-211)19 July 1983 & JP-A-58 070 454

## Description

### BACKGROUND OF THE INVENTION

### Field of the Invention:

The present invention relates to improvements of magnetic tape cassettes used in magnetic tape recording and reproducing apparatuses.

### Description of the Related Art:

Presently, there disclosed in Japanese Laid-open Patent Application NO.63779/85. such a magnetic tape cassette (referred to as a "tape cassette" or a "cassette" hereafter) as an R-DAT(rotary head digital audio tape) type cassette which is provided with a slider along the bottom surface of the cassette according to a specification prescribed in the industry standard for the R-DAT type cassette. The slider closes reel holes and a mouth(opening) for accepting a device for pulling the tape out of the cassette unless the cassette is loaded into the apparatus in order to prevent abuse or contamination of the tape housed in the cassette.

Fig. 1 is a perspective view from underneath of an embodiment of an R-DAT tape cassette in a prior art comprising the features in the preamble of Claim 1.

Fig. 2A and Fig. 2B are side elevations of the tape cassette shown in Fig. 1.

Fig. 3 is a bottom plan view showing the tape cassette shown in Fig. 2B.

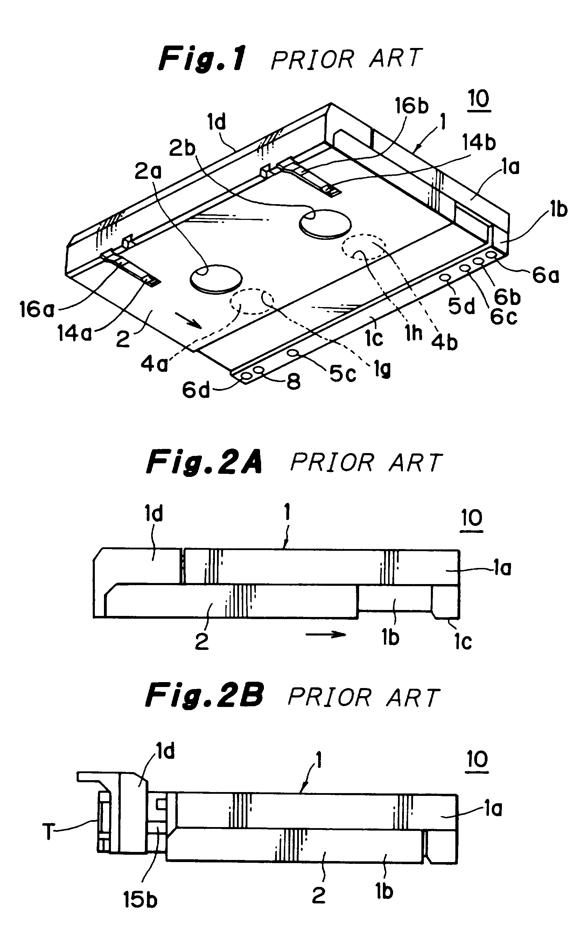

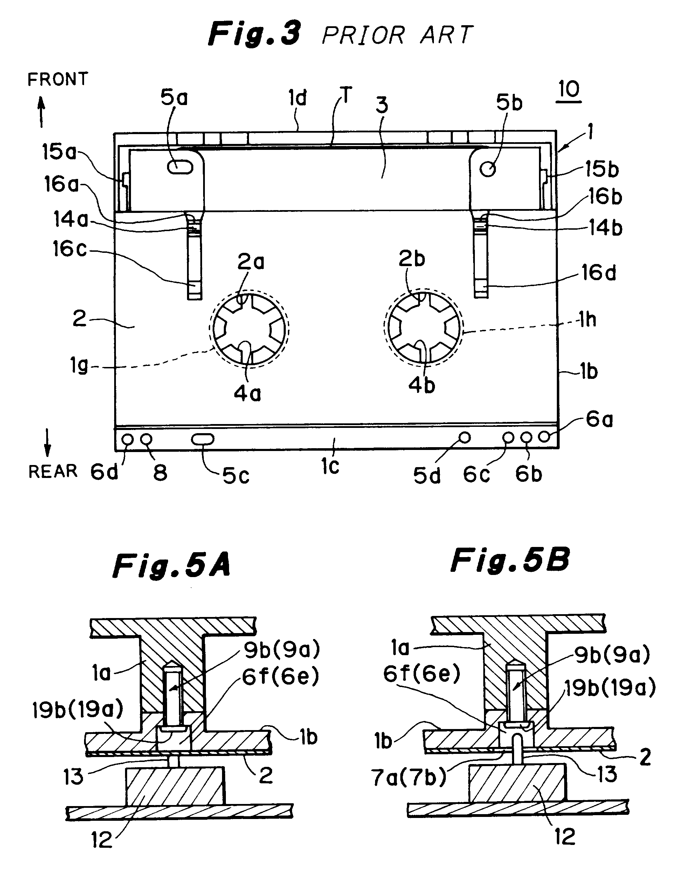

In these Figures, the numeral 10 indicates an R-DAT cassette having a cassette case comprised of an upper half 1a and a lower half 1b, 1d front lid provided at the front of the cassette case 1, a mouth (opening) 3 formed at the lower half 1b behind the front lid 1d for permitting an insertion of tape loading poles of the apparatus, 4a ,4b reel sockets provided respectively and concentrically with supply and take-up reel hubs (not shown) in which a magnetic tape T is wound, 1g, 1h reel disc holes provided in the lower half 1b, through which reel discs 7 of the apparatus engage with the reel sockets 4a and 4b, 2 a slider provided along a bottom surface of the cassette case 1. Unless the cassette 10 is loaded into the apparatus the slider 2 covers the mouth 3 provided for pulling the tape T out from the cassette 10, and covers also the reel disc holes 1g, 1h for preventing abuse or contamination of the Tape T housed in the cassette 10. 2a and 2b denote round holes provided in the slider 2 for permitting insertion of reel discs 7 for engaging with the reel sockets 4a, 4b through the reel disc holes 1g, 1h upon loading the cassette 10 into the apparatus, 14a and 14b denote slider locks for locking the slider 2 at a closed position as in Fig. 1 and Fig. 2A and at an open position as shown in Fig. 2B and Fig. 3 by engaging with lock holes 16a, 16b, 16c and 16d provided in the slider 2, 15a, 15b reel lock levers disengaging a reel brake (not shown) by engaging with the front lid 1d when the front lid 1d is opened upon being loaded as shown in Fig. 2B.

As illustrated in Fig. 3, on the bottom of the lower half 1d, a pair of positioning holes 5a, 5b is provided in a close vicinity of the front end of the cassette 10, and another pair of positioning holes 5c and 5d is provided on a back rib 1c of the cassette 10. Positioning holes 5a and 5b are closed by the slider 2 when the slider 2 is at a closed position as shown in Fig. 1, however, with the slider 2 at its closed position, the positioning holes 5c and 5d as well as detection holes 6a through 6b, and an erasure protection hole 8 are arranged not covered or sealed by the slider 2 since they are all blind holes provided on the back rib 1c having enough thickness to have them thus positioned out of a sliding range of the slider 2. The detection holes 6a through 6d are provided for the purpose of detecting a size of reel hub, a tape length, a tape thickness and a type of magnetic material coated on the magnetic tape of the tape cassette 10.

A detection system of the apparatus has detecting pins (switches) aligned correspondingly with the positions of the detection holes 6a through 6d of the loaded tape cassette. The detection is performed as such that upon loading the cassette into the apparatus, the detecting pins are activated according to existence or nonexistence of the corresponding detection holes. Presently, there is a demand for increasing a number of such detection holes for reasons including an increase of the variety of tapes to be accommodated in the cassette. However, since spaces available for the detection holes are restricted within limited parts of the bottom of the lower half where tape rolls on the reel hubs never reside. Such limited parts may be both the side portions or the center portion of the back end of the cassette, in this regard, it is more difficult to provide many detection holes on a smaller tape cassette than on a larger cassette. One of conceivable solutions is that such additional detection holes are provided on the bottom plate of the lower half 1b behind the slider 2 with corresponding through holes additionally provided thereon to permit the detecting pins entering therein. However, such detection holes if provided would be through holes having an adequate depth for the detection system(pins) reaching to the chamber where the tape resides, then they would allow dust invasion to the chamber contradicting the purpose of the slider.

Another conceivable solution is providing blind holes on the bottom plate, however it would require a thicker bottom plate to give an adequate detecting stroke to the detecting pins, this contradicts the requirement or demand for compactness of the cassette, alternatively, through holes may be provided to the slider itself without having corresponding holes in the bottom plate, however it would require the slider 2 thick enough to give the necessary stroke of the detecting pins, in this regard, 0.2 to 0.3 mm thick slider would not serve the purpose, so that it would be against the compactness of the cassette.

EP-A- 0 406 943 discloses a tape cassette having a slider for closing the reel holes and the mouth opening of the cassette. The slider is provided with through holes which communicate in the open state of the slider with locating apertures in the cassette wall so that locating pins of the tape drive can be received in the apertures for mechanically fixing the position of the cassette. According to JP-A- 60 175 233 the presence of a hole is detected in which a screw resides for connecting the two cassette halves. The detection result is used for determining the orientation of a cassette inserted in a tape deck. The cassette is not provided with a slider.

### SUMMARY OF THE INVENTION

Accordingly, a general object of the present invention is to provide a novel and useful tape cassette in which the above disadvantages have been eliminated.

A more specific object of the present invention is to provide a small and dust free magnetic tape cassette enabling to provide many detection holes without having additional holes in the cassette case. At the bottom surface of the cassette case comprised of an upper half and lower half, a slider is movably provided to cover openings for permitting access of tape operating mechanism of a magnetic tape recording and/or reproducing apparatus, when the cassette is not loaded into the apparatus. Further, assembly holes are provided in the lower half for connecting the lower half with the upper half by screws, and passing holes in positions corresponding to the assembly holes in the slider so as to expose the assembly holes when the cassette is loaded into the tape apparatus for permitting the detecting pins of the apparatus entering into the assembly holes through the passing holes when the tape cassette is loaded into the tape apparatus.

Other objects and further features of the present invention will be apparent from the following detailed description when read in conjunction with the accompanying drawings.

### BRIEF DESCRIPTION OF THE DRAWINGS

Preferred embodiments of the present invention will be described with reference to the accompanying drawings wherein:

Fig. 1 is a perspective view from underneath of an embodiment of an R-DAT tape cassette in a prior art.

Fig. 2A and Fig. 2B are side elevations of the tape cassette shown in Fig. 1.

Fig. 3 is a bottom plan view showing the tape cassette shown in Fig. 2B.

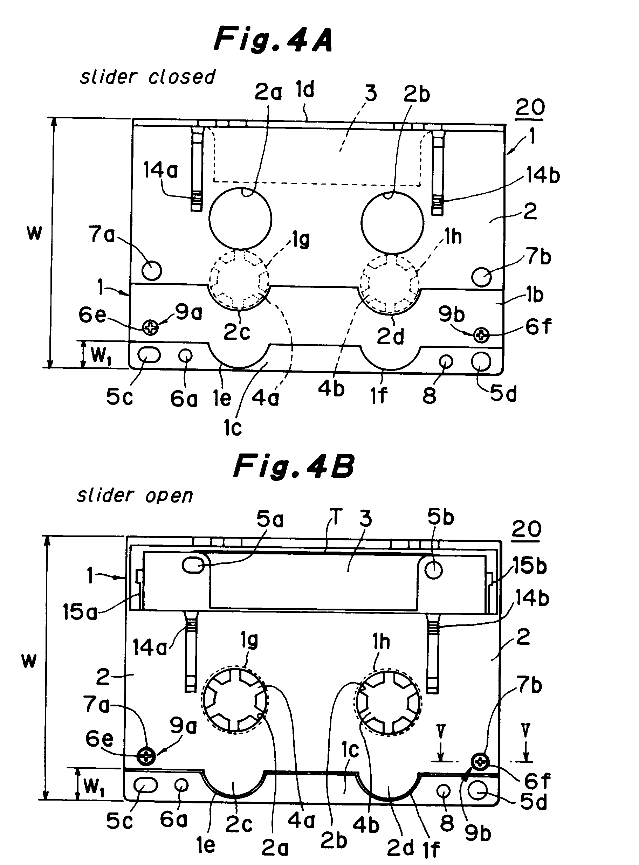

Fig. 4A and Fig. 4B are bottom plan views showing an embodiment of a tape cassette of the present invention with a slider at a closed position and at an open position respectively.

Fig. 5A and Fig. 5B are cross-sectional views respectively showing a main part of the present invention with a detection system along v-v line in Fig. 4B.

### DETAILED DESCRIPTION OF THE PREFERRED EMBODIMENT

A tape cassette 20 according to the present invention has the same construction and arrangement as the one shown in Fig. 1 through Fig. 3 except positions of the detection holes and a form of the slider which are main parts of the present invention.

In these figures, parts similar to those previously described with reference to Figs. 1 through 3 are denoted by the same reference numerals and the detailed description will be omitted for simplicity.

Referring to Fig. 4A and Fig. 4B in this embodiment, for the purpose of reducing a fore to aft dimension of the cassette 20, the configuration of the slider 2 is modified at its back end to have 2 semicircular portions 2c, 2d having a height W1. The 2 semicircular portions 2c and 2d correspondingly cover the reel sockets 4a,4b round holes 2a, 2b when the slider 2 is at the closed position. In order to shorten a depth W of the case 1, there provided on the back rib 1c semicircular recesses 1e, 1f for accepting respectively the semicircular potions 2c, 2d as shown in Fig. 4B, which provide an extra travel to the slider 2 when it moves to the open position so that the depth W of the case 1 is reduced in overall by approximately W1 compared with the one without the recesses 1e, 1f. However, this eats up a space on the back rib 1c for detection holes mentioned earlier leaving a space only for one detection hole 6a on the back rib 1c. Solution to this problem will be given in the following.

Referring to Figs. 4A, 4B, 5A and 5B, the numeral 1a denotes the upper half, 1b the lower half, 6e, 6f spot facings connected to through holes both provided in the lower half 1b, which have double functions, one for seating heads 19a, 19b of screws 9a and 9b for assembling together the upper and lower halves 1a and 1b, another for serving as detection holes together with passing holes 7a and 7b provided on the slider 2 itself. The spot facings 6e and 6f leave respectively a headroom(clearance) between the screw head 19 and the bottom surface of the lower half 1b after the assembly.

Next, the detailed description will be given to the passing holes 7a, 7b and spot facings 6e, 6f which are main parts of the present invention.
The passing holes 7a and 7b are aligned with the spot facings 6e and 6f, and the round holes 2a, 2b are aligned with reel sockets 4a, 4b when the slider 2 is at the open position where the detection is performed.

Since the spot facings 6e, 6f are connected to blind holes formed in corresponding posts of the upper half 1a and are further filled with the screws 9a and 9b after the assembly, there have no possibilities of dust invasion through the spot facings 6e and 6f. When the slider 2 is at the closed position, the passing holes 7a, 7b are positioned against a plain bottom surface of the lower half 1b thus no chance of dust invasion through the passing holes 7a, 7b. Then the detection is performed by detecting whether the spot facings 6e and 6f are exposed or not with the slider 2 at its open position, whereas a non-exposed state is produced by using the slider 2 with no passing holes 7a and 7b, further, this may be combined with the detection hole 6a being formed or not on the back rib 1c. In this embodiment, such predetermined hole arrangement as hole 7a exposing 6e 7b exposing 6f, 6e unexposed, 6f unexposed, 6a exposed and 6a unexposed may be detected by the detecting pin 13 of the detection switch 12 upon loading the cassette 20 to the apparatus, as shown in Fig. 5A and Fig. 5B. With the slider 2 at its open position, the passing hole 7a or 7b, when exists, allows the detecting pin 13 penetrating adequately into the spot facing 6e or 6f as shown in Fig. 5B because of the provided headroom which gives an enough operating stroke to the pin 13. When the slider 2 has no passing hole 7a or 7b or both the pin 13 stops against the slider 2 as shown in Fig. 5A.

Table 1 shows an example of combination of those holes how they can be arranged to indicate various items in relation to the operation of the detecting pins. In the Table, the MP Tape and ME Tape respectively denote Metal Particle Tape and Metal Evaporated Tape.

**Table 1**

| HOLE REF. NO. | ITEMS TO BE DETECTED | PIN OPERATION | |
|---|---|---|---|
| | | NO PASS | PASS |
| 6a | Kinds of Tape | MP Tape | ME Tape |
| 7a | Thickness of Tape | thick | thin |
| 7b | Reel Size | large | small |

According to the construction of the present invention, the spot facings provided on the lower half of the cassette case are used as detection holes together with the passing holes in the slider, even if the slider is made very thin. This contributes to realize a very compact cassette with a plurality of the detection holes on the limited space of the bottom surface of the cassette yet not penetrating into the chamber where the magnetic tape resides.

## Claims

1. A magnetic tape cassette (10) suitable for use with a tape apparatus with a detection system having hole detecting means (13) comprising:
a cassette case (1) comprised of an upper half and a lower half;
openings (2a, 2b) defined in a bottom of the lower half for permitting access of tape operating means of said apparatus;
a slide (2) movably provided along the bottom of said lower half for closing said openings (2a, 2b) when said magnetic tape cassette (10) is not loaded into said tape apparatus and for exposing said openings (2a, 2b) when said magnetic tap cassette (10) is loaded into said tape apparatus;
said cassette being characterised by:
assembly hole means (6e, f) defined in a bottom of said cassette case (1);
connecting means (9) for connecting said upper half and lower half through said assembly hole means (6e, 6f) to assemble said cassette case;
passing hole means (7a, 7b) defined in said slider (2) at a position corresponding to said assembly hole means (6e, 6f) so as to expose said assembly hole (6e, 6f) means when said magnetic tape cassette (10) is loaded into said tape apparatus for permitting said detecting means (13) entering into said assembly hole means (6e, 6f) through said passing hole means (7a, 7b).

2. A magnetic tape cassette claimed in claim 1, in which said cassette case further comprises a back rib (1c) and said assembly hole means (6e, 6f) is an assembly hole provided in an area other than said back rib, the assembly hole having a room left between one end of said connecting means and a bottom surface of said lower half for accepting said detecting means (13).

## Patentansprüche

1. Magnetbandkassette (10), die zur Verwendung in einem Bandgerät mit einem Erkennungssystem geeignet ist, das Erkennungsmittel (13) aufweist mit:
einem Kassettengehäuse (1), das aus einer oberen Hälfte und einer unteren Hälfte gebildet ist;
Öffnungen (2a, 2b), die in einem Boden der unteren Hälfte ausgebildet sind, um Bandbetätigungsmitteln des Gerätes einen Zugang zu ermöglichen;
einem entlang des Bodens der unteren Hälfte verschiebbar angeordneten Schieber (2), um die Öffnungen (2a, 2b) zu schließen, wenn die Magnetbandkassette (10) nicht in das Gerät eingelegt ist, und um die Öffnungen (2a, 2b) freizugeben, wenn die Magnetbandkassette in das Bandgerät eingelegt ist;
wobei die Kassette gekennzeichnet ist durch:
eine Montagelochanordnung (6e, f), die in einem Boden des Kassettengehäuses ausgebildet ist,
Verbindungsmittel (9) zum Verbinden der oberen Hälfte und der unteren Hälfte durch die Montagelochanordnung (6e, 6f), um das Kassettengehäuse zusammenzubauen;
eine Durchgangslochanordnung (7a, 7b), die in dem Schieber an einer Stelle ausgebildet ist, die mit der Montagelochanordnung übereinstimmt, um so die Montagelochanordnung freizulegen, wenn die Magnetbandkassette in das Bandgerät eingelegt ist, um die Erkennungsmittel durch die Durchgangslochanordnung in die Montagelochanordnung eindringen zu lassen.

2. Magnetbandkassette nach Anspruch 1, bei der die Kassette des weiteren eine Rückenrippe (1c) aufweist und die Montagelochanordnung (6e, 6f) ein Montageloch ist, das in einem von der Rückenrippe abgelegenen Bereich angeordnet ist, wobei das Montageloch einen zwischen einem Ende der Verbindungsmittel und einer Bodenfläche der unteren Hälfte zum Aufnehmen der Erkennungsmittel (13) gelassenen Freiraum hat.

## Revendications

1. Cassette (10) à bande magnétique utilisable avec un appareil à bande, pourvu d'un système de détection présentant des moyens de détection (13) de trous, comprenant :
un boîtier (1) de cassette constitué d'une moitié supérieure et d'une moitié inférieure ;
des ouvertures (2a, 2b) définies sur la face inférieure de la moitié inférieure, pour permettre l'accès auxdits moyens d'actionnement de bande dudit appareil ;
un coulisseau (2) prévu de manière à pouvoir se déplacer le long de la face inférieure de ladite moitié inférieure, pour fermer lesdites ouvertures (2a, 2b) lorsque ladite cassette (10) à bande magnétique n'est pas chargée dans ledit appareil à bande et pour exposer lesdites ouvertures (2a, 2b) lorsque ladite cassette (10) à bande magnétique est chargée dans ledit appareil à bande ;
ladite cassette étant caractérisée par :
des moyens servant de trous d'assemblage (6e, 6f) prévus dans une face inférieure dudit boîtier (1) de cassette ;
des moyens de liaison (9) pour relier ladite moitié supérieure à ladite moitié inférieure grâce auxdits moyens servant de trous d'assemblage (6e, 6f), pour assembler ledit boîtier de cassette ;
des moyens servant de trous de passage (7a, 7b) définis dans ledit coulisseau (2), en une position correspondant auxdits moyens servant de trous d'assemblage (6e, 6f), de manière à exposer lesdits moyens servant de trous d'assemblage (6e, 6f) lorsque ladite cassette (10) à bande magnétique est chargée dans ledit appareil à bande, pour permettre auxdits moyens de détection (13) d'entrer dans lesdits moyens servant de trous d'assemblage (6e, 6f), en passant à travers lesdits moyens servant de trous de passage (7a, 7b).

2. Cassette à bande magnétique selon la revendication 1, dans laquelle ledit boîtier de cassette comprend en outre un rebord arrière (1c) et ledit moyen servant de trous d'assemblage (6e, 6f) est un trou d'assemblage prévu dans une zone autre que ledit rebord arrière, le trou d'assemblage présentant un espace laissé entre une extrémité desdits moyens de liaison et la surface inférieure de ladite moitié inférieure, pour recevoir lesdits moyens de détection (13).
